# EUROPEAN PATENT APPLICATION

(11) **EP 4 707 628 A1**
(43) Date of publication of application: **11.03.2026**
(21) Application number: 24883631.4
(22) Date of filing: 31.12.2024
(51) Int. Cl.: F16D 3/78, F16D 3/64

(54) **ANNULAR DIAPHRAGM, FLANGE AND TRANSMISSION CONNECTION ASSEMBLY**

(30) Priority: 22.07.2024 CN 202410984671; 29.07.2024 CN 202411024426
(71) Applicant: Jiang, Hong, Beijing 100044 (CN)
(72) Inventor: WANG, Xiaochun, Beijing 100044 (CN)
(74) Representative: Huang, Liwei
(86) International application number: PCT/CN2024/144269
(87) International publication number: WO 2026/020750

(57) **Abstract**

The present disclosure provides an annular diaphragm, a flange and a drive connection component. The annular diaphragm includes a diaphragm body, one radial end of the diaphragm body being formed with a diaphragm corrugated skirt structure, the diaphragm corrugated skirt structure including diaphragm skirt protrusions and diaphragm skirt recesses, the diaphragm skirt recesses and the diaphragm skirt protrusions being alternately provided in a circumferential direction of the diaphragm body. A driving object and/or a driven object may be in drive connection with the annular diaphragm through the diaphragm corrugated skirt structure. No stress concentration occurs at the joint, greatly improving the safety, power density and service life of the annular diaphragm. The diaphragm corrugated skirt structure is detachable and is low in maintenance cost. The present disclosure solves the problems in the prior art that when connecting the diaphragm and the flange by using pin holes and pin bolts, local stress concentration is prone to occur and the load-bearing capacity of the diaphragm is reduced, and that when connecting the diaphragm and the flange by using a welding manner, detachment for maintenance cannot be performed and the material strength at the weld seam is low when the diaphragm is made of high-strength material.

## Description

### TECHNICAL FIELD

The present disclosure belongs to the technical field of drive, and particularly relates to an annular diaphragm, a flange and a drive connection component.

### BACKGROUND

Diaphragm couplings are widely used in mechanical drive. However, the joint between the existing diaphragm and flange is very weak. The commonly used method of connection using pin holes and pin bolts will easily lead to stress concentration near the pin holes, and the stress near the pin holes may reach three times or even more than the stress at other positions of the diaphragm, which undoubtedly has a significant impact on the safety and load-bearing capacity per unit volume of a diaphragm coupling. Some people have proposed connecting the diaphragm and flange by using a welding manner, but the welding manner also has significant inherent defects. For example, the welded structure is undetachable, and therefore can merely be scrapped as a whole if individual parts fail. Moreover, a diaphragm made of high-strength material is often difficult to weld, and may crack after welding, or the material strength at the weld seam may significantly decrease, which goes against improving the safety of the coupling and increasing power density. Therefore, it is of great practical significance to design a mechanical connection manner that will hardly produce local stress concentration for improving the performance of diaphragm couplings.

### SUMMARY

In view of the above, the present disclosure provides an annular diaphragm, a flange and a drive connection component, to solve the problems in the prior art that when connecting the diaphragm and the flange by using pin holes and pin bolts, local stress concentration is prone to occur and the load-bearing capacity of the diaphragm is reduced, and that when connecting the diaphragm and the flange by using a welding manner, detachment for maintenance cannot be performed and the material strength at the weld seam is low when the diaphragm is made of high-strength material.

The present disclosure provides an annular diaphragm, which includes a diaphragm body, one radial end of the diaphragm body being formed with a diaphragm corrugated skirt structure, and the diaphragm corrugated skirt structure being configured for drive connection with a driving object and/or a driven object;
the diaphragm corrugated skirt structure is formed with diaphragm skirt protrusions and diaphragm skirt recesses alternately in a circumferential direction of the diaphragm body, the diaphragm skirt protrusion protruding towards one axial side of the diaphragm body, and the diaphragm skirt recess recessing towards the other axial side of the diaphragm body; and
a convex height of the diaphragm skirt protrusion and a concave depth of the diaphragm skirt recess respectively decrease gradually to the diaphragm body in a radial direction of the diaphragm body.

Further optionally, at any axial side of the diaphragm body, a convex surface of the diaphragm skirt protrusion and a concave surface of the diaphragm skirt recess respectively transition gradually and smoothly to a corresponding axial side surface of the diaphragm body in the radial direction of the diaphragm body.

Further optionally, on a cross-section in the circumferential direction of the diaphragm corrugated skirt structure, the diaphragm skirt protrusion is formed with a diaphragm skirt protrusion circumferential contour line, and the diaphragm skirt recess is formed with a diaphragm skirt recess circumferential contour line; and
in the case where the circumferential cross-section of the diaphragm corrugated skirt structure is unfolded into a plane, both the diaphragm skirt protrusion circumferential contour line and the diaphragm skirt recess circumferential contour line are circular arc lines, or one diaphragm skirt protrusion circumferential contour line and one adjacent diaphragm recess circumferential contour line form a periodic sine curve;
the circumferential cross-section of the diaphragm corrugated skirt structure is a circumferential cross-section formed by cutting off the diaphragm corrugated skirt structure by a cylinder plane provided coaxially with the diaphragm body.

Further optionally, the diaphragm corrugated skirt structure includes in the radial direction of the diaphragm body a first corrugated segment and a second corrugated segment, the first corrugated segment being provided away from the diaphragm body, and the second corrugated segment being provided close to the diaphragm body;
in a direction from the first corrugated segment to the second corrugated segment, a corrugation height of the first corrugated segment linearly decreases; and
in the radial direction of the diaphragm body, the second corrugated segment is tangentially connected with the first corrugated segment, and the second corrugated segment is tangentially connected with the diaphragm body.

Further optionally, the diaphragm corrugated skirt structure is formed by calendaring and stretching one radial end of the diaphragm body.

Further optionally, the diaphragm skirt protrusion is tangentially connected with an adjacent diaphragm skirt recess, and an included angle between a tangent plane A at which the diaphragm skirt protrusion and the adjacent diaphragm skirt recess are tangentially connected and a center plane of the diaphragm body is α, which satisfies at the radial end of the diaphragm body: 20°≤α≤35°; and/or
an included angle between a tangent plane B passing through an outer contour peak line of the diaphragm skirt protrusion and the center plane of the diaphragm body is β, which satisfies: 4.5°≤β≤12°; in an axial direction of the diaphragm body, from the center plane of the diaphragm body to the diaphragm skirt protrusion, the outer contour peak line of the diaphragm skirt protrusion is provided away from the center plane of the diaphragm body, and an inner contour peak line of the diaphragm skirt protrusion is provided close to the center plane of the diaphragm body.

Further optionally, the diaphragm corrugated skirt structure has a width of W10 in the radial direction of the diaphragm body, the first corrugated segment has a width of W11 in the radial direction of the diaphragm body, and the W10 and W11 satisfy: 60%≤W11/W10≤80%.

Further optionally, the diaphragm body includes a diaphragm radial inner edge and a diaphragm radial outer edge which are oppositely provided in the radial direction of the diaphragm body, the diaphragm corrugated skirt structure being formed at least at the diaphragm radial inner edge.

Further optionally, the diaphragm corrugated skirt structure formed at the diaphragm radial inner edge is a diaphragm corrugated inner skirt structure; a first corrugated segment of the diaphragm corrugated inner skirt structure is a first inner corrugated segment, and a second corrugated segment of the diaphragm corrugated inner skirt structure is a second inner corrugated segment; and
the first inner corrugated segment, the second inner corrugated segment and the diaphragm body are sequentially provided in the radial direction of the diaphragm body from inside to outside; and a corrugation height of the first inner corrugated segment linearly decreases in the radial direction of the diaphragm body from inside to outside.

Further optionally, the diaphragm corrugated skirt structure formed at the diaphragm radial outer edge is a diaphragm corrugated outer skirt structure; a first corrugated segment of the diaphragm corrugated outer skirt structure is a first outer corrugated segment, and a second corrugated segment of the diaphragm corrugated outer skirt structure is a second outer corrugated segment; and
the first outer corrugated segment, the second outer corrugated segment and the diaphragm body are sequentially provided in the radial direction of the diaphragm body from outside to inside; and a corrugation height of the first outer corrugated segment linearly decreases in the radial direction of the diaphragm body from outside to inside.

The present disclosure further provides a flange, which includes a flange plate and a shaft extension provided at one axial end of the flange plate; the shaft extension includes a shaft extension body, the shaft extension body being formed with a shaft extension corrugated skirt structure; the shaft extension corrugated skirt structure is away from the flange plate and is located at one radial end of the shaft extension body; and the shaft extension corrugated skirt structure has a structure matched with any one of the diaphragm corrugated skirt structures as described above.

The present disclosure further provides a flange, which includes a flange plate and a shaft extension, the shaft extension being provided at one axial end of the flange plate; the shaft extension includes a shaft extension body, the shaft extension body being formed with a shaft extension corrugated skirt structure; the shaft extension corrugated skirt structure is away from the flange plate and is located at one radial end of the shaft extension body; and the shaft extension corrugated skirt structure is configured for drive connection with a driving object and/or a driven object;
the shaft extension corrugated skirt structure is formed with shaft extension protrusions and shaft extension recesses alternately in a circumferential direction of the shaft extension body, the shaft extension protrusion protruding towards one axial side of the shaft extension body, the shaft extension recess recessing towards the other axial side of the shaft extension body; and
the shaft extension protrusion and the shaft extension recess respectively transition gradually and smoothly to the shaft extension body in a radial direction of the shaft extension body.

Further optionally, on a cross-section in a circumferential direction of the shaft extension corrugated skirt structure, the shaft extension protrusion is formed with a shaft extension protrusion circumferential contour line, and the shaft extension recess is formed with a shaft extension recess circumferential contour line;
in the case where the circumferential cross-section of the shaft extension corrugated skirt structure is unfolded into a plane, both the shaft extension protrusion circumferential contour line and the shaft extension recess circumferential contour line are circular arc lines, or one shaft extension protrusion circumferential contour line and one adjacent shaft extension recess circumferential contour line form a periodic sine curve;
the circumferential cross-section of the shaft extension corrugated skirt structure is a circumferential cross-section formed by cutting off the shaft extension corrugated skirt structure by a cylinder plane provided coaxially with the shaft extension body.

Further optionally, the shaft extension corrugated skirt structure includes in the radial direction of the shaft extension body a third corrugated segment and a fourth corrugated segment, the third corrugated segment being provided away from the shaft extension body, the fourth corrugated segment being provided close to the shaft extension body;
in a direction from the third corrugated segment to the fourth corrugated segment, a corrugation height of the third corrugated segment linearly decreases; and
in the radial direction of the shaft extension body, the third corrugated segment is tangentially connected with the fourth corrugated segment, and the third corrugated segment is tangentially connected with the shaft extension body.

Further optionally, the shaft extension corrugated skirt structure is formed by performing cutting machining, pressure machining or electric machining on the radial end of the shaft extension body.

Further optionally, the shaft extension protrusion is tangentially connected with an adjacent shaft extension recess, and an included angle between a tangent plane C at which the shaft extension protrusion and the adjacent shaft extension recess are tangentially connected and a center plane of the shaft extension body is γ, which satisfies at the radial end of the shaft extension body: 20°≤γ≤35°.

Further optionally, an included angle between a tangent plane D passing through an outer contour peak line of the shaft extension protrusion and the center plane of the shaft extension body is θ, which satisfies: 4.5°≤θ≤12°; and
in an axial direction of the shaft extension body, from the center plane of the shaft extension body to the shaft extension protrusion, the outer contour peak line of the shaft extension protrusion is provided away from the center plane of the shaft extension body, and an inner contour peak line of the shaft extension recess is provided close to the center plane of the shaft extension body.

Further optionally, the shaft extension corrugated skirt structure has a width of W20 in the radial direction of the shaft extension body, the third corrugated segment has a width of W21 in the radial direction of the shaft extension body, and the W20 and W21 satisfy: 60%≤W21/W20≤80%.

Further optionally, the shaft extension body includes a shaft extension radial inner edge and a shaft extension radial outer edge, the shaft extension corrugated skirt structure being formed at the shaft extension radial inner edge or the shaft extension radial outer edge.

Further optionally, the shaft extension corrugated skirt structure formed at the shaft extension radial inner edge is a shaft extension corrugated inner skirt structure; a third corrugated segment of the shaft extension corrugated inner skirt structure is a third inner corrugated segment, and a fourth corrugated segment of the shaft extension corrugated inner skirt structure is a fourth inner corrugated segment; and
the third inner corrugated segment, the fourth inner corrugated segment and the shaft extension body are sequentially provided in the radial direction of the shaft extension body from inside to outside; and a corrugation height of the third inner corrugated segment linearly decreases in the radial direction of the shaft extension body from inside to outside.

Further optionally, the shaft extension corrugated skirt structure formed at the shaft extension radial outer edge is a shaft extension corrugated outer skirt structure; a third corrugated segment of the shaft extension corrugated outer skirt structure is a third outer corrugated segment, and a fourth corrugated segment of the shaft extension corrugated outer skirt structure is a fourth outer corrugated segment; and
the third outer corrugated segment, the fourth outer corrugated segment and the shaft extension body are sequentially provided in the radial direction of the shaft extension body from outside to inside; and a corrugation height of the third outer corrugated segment linearly decreases in the radial direction of the shaft extension body from outside to inside.

The present disclosure further provides a drive connection component, which includes an inner flange and any one of the annular diaphragms as described above, the inner flange being any one of the flanges as described above;
a radial inner edge of the diaphragm body is formed with the diaphragm corrugated skirt structure, and a radial outer edge of the diaphragm body is formed with diaphragm pin holes; and a radial inner edge of a shaft extension body of the inner flange is formed with the shaft extension corrugated skirt structure;
the drive connection component further includes an outer flange, a flange plate of the outer flange being formed with outer flange pin holes; and
the diaphragm corrugated skirt structure is matched with the shaft extension corrugated skirt structure, and the diaphragm pin holes are matched with the outer flange pin holes, so that the annular diaphragm can be connected with the inner flange and the outer flange.

The present disclosure further provides a drive connection component, which includes any one of the annular diaphragms as described above and any one of the flanges as described above;
both the radial inner edge and the radial outer edge of the diaphragm body are formed with the diaphragm corrugated skirt structure; the diaphragm corrugated skirt structure formed at the radial inner edge of the diaphragm body is a diaphragm corrugated inner skirt structure, and the diaphragm corrugated skirt structure formed at the radial outer edge of the diaphragm body is a diaphragm corrugated outer skirt structure;
the flange includes an inner flange and an outer flange; a radial inner edge of a shaft extension body of the inner flange is formed with the shaft extension corrugated skirt structure which is a shaft extension corrugated inner skirt structure; and a radial outer edge of a shaft extension body of the outer flange is formed with the shaft extension corrugated skirt structure which is a shaft extension corrugated outer skirt structure; and
the diaphragm corrugated inner skirt structure is matched with the shaft extension corrugated inner skirt structure, and the diaphragm corrugated outer skirt structure is matched with the shaft extension corrugated outer skirt structure, so that the annular diaphragm can be connected with the inner flange and the outer flange.

Compared with the prior art, the present disclosure mainly has the beneficial effects as follows.

The annular diaphragm is formed with a diaphragm corrugated skirt structure, the diaphragm corrugated skirt structure including diaphragm skirt protrusions and diaphragm skirt recesses, the diaphragm skirt recesses and the diaphragm skirt protrusions being alternately provided in a circumferential direction of the diaphragm body. A driving object and/or a driven object may be in drive connection with the annular diaphragm through the diaphragm corrugated skirt structure. No stress concentration occurs at the joint, greatly improving the safety, power density and service life of the annular diaphragm. The maximum stress at the joint between the diaphragm and the flange when connecting the diaphragm and the flange by using the corrugated skirt structure may be reduced to about 1/3 of that at the joint between the diaphragm and the flange when connecting the diaphragm and the flange by using pin holes and pin bolts. The diaphragm corrugated skirt structure is detachable and is low in maintenance cost. The present disclosure solves the problems in the prior art that when connecting the diaphragm and the flange by using pin holes and pin bolts, local stress concentration is prone to occur and the load-bearing capacity of the diaphragm is reduced, and that when connecting the diaphragm and the flange by using a welding manner, detachment for maintenance cannot be performed and the material strength at the weld seam is low when the diaphragm is made of high-strength material.

### BRIEF DESCRIPTION OF DRAWINGS

In order to more clearly describe the technical solutions in the embodiments of the present disclosure or in the prior art, the drawings to be used in the description of the embodiments or the prior art will be briefly introduced below. Apparently, the drawings in the following description are merely illustrative, and those ordinary skilled in the art can also obtain other implementation drawings according to the extension of the provided drawings without making creative effort.

Structures, proportions, sizes, and the like depicted in this specification are merely used to facilitate understanding and reading of the contents disclosed in the specification by those skilled in the art, but are not intended to define the conditions for implementation of the present disclosure, and thus have no technical material meaning. Any modification of the structures, change of the proportional relations or adjustment of the sizes, made without affecting the effects and objectives that can be achieved by the present disclosure, should still fall within the scope defined by the technical content disclosed in the present disclosure.

Figs. 1a, 1b, and 1c are schematic structural diagrams of an embodiment of an annular diaphragm provided by the present disclosure when a diaphragm radial inner edge is formed with a diaphragm corrugated skirt structure and a diaphragm radial outer edge is formed with a diaphragm pin hole;
Fig. 1d is a front view of an inner cylinder unfolded plane in Fig. 1c;
Fig. 1e is an enlarged view of an annular diaphragm provided by the present disclosure at a diaphragm radial inner edge;
Figs. 2a and 2b are schematic structural diagrams of an embodiment of an annular diaphragm provided by the present disclosure when both a diaphragm radial inner edge and a diaphragm radial outer edge are formed with a diaphragm corrugated skirt structure;
Fig. 2c is an enlarged view at A in Fig. 2b;
Fig. 3 is an enlarged view of an annular diaphragm provided by the present disclosure at a diaphragm radial outer edge;
Fig. 4a is a schematic structural diagram of an embodiment of an inner flange provided by the present disclosure;
Fig. 4b is an enlarged view at B in Fig. 4a;
Fig. 5 is a schematic structural diagram of an embodiment of a hold-down ring provided by the present disclosure;
Fig. 6a is an assembly schematic structural diagram of an embodiment of a hold-down bolt, a hold-down ring, an annular diaphragm and an inner flange provided by the present disclosure;
Fig. 6b is a sectional schematic structural diagram of an embodiment of a hold-down bolt, a hold-down ring, an annular diaphragm and an inner flange provided by the present disclosure;
Figs. 6c and 6d are explosive schematic structural diagrams of an embodiment of a hold-down bolt, a hold-down ring, an annular diaphragm and an inner flange provided by the present disclosure;
Fig. 7 is a finite element analysis cloud diagram of an annular diaphragm provided by the present disclosure when a diaphragm radial inner edge is formed with a diaphragm corrugated skirt structure and a diaphragm radial outer edge is formed with a diaphragm pin hole;
Fig. 8a is an overall finite element analysis cloud diagram of an annular diaphragm provided by the present disclosure when both the diaphragm radial inner edge and the diaphragm outer radial edge are formed with a diaphragm pin hole;
Fig. 8b is a finite element analysis cloud diagram of an annular diaphragm provided by the present disclosure in the X direction when both the diaphragm radial inner edge and the diaphragm radial outer edge are formed with a diaphragm pin hole; and
Fig. 8c is a finite element analysis cloud diagram of an annular diaphragm provided by the present disclosure at the diaphragm radial inner edge when both the diaphragm radial inner edge and the diaphragm radial outer edge are formed with a diaphragm pin hole;
in the drawings:
1-annular diaphragm; 11-diaphragm body; 111-first axial side surface; 12-diaphragm radial inner edge; 13-diaphragm radial outer edge; 131-positioning hole; 132-diaphragm pin hole; 14-diaphragm corrugated inner skirt structure; 141-first inner corrugated segment; 142-second inner corrugated segment; 15-diaphragm corrugated outer skirt structure; 151-first outer corrugated segment; 152-second outer corrugated segment; 161-diaphragm skirt protrusion circumferential contour line; 162-diaphragm skirt recess circumferential contour line; 163-diaphragm skirt protrusion; 164-diaphragm skirt recess; 165-convex surface; 166-concave surface; 171-inner cylinder plane; 172-inner cylinder unfolded plane; 181-tangent plane A; 182-tangent plane B; 183-center plane of diaphragm body;
3-inner flange; 31-inner flange plate; 32-shaft extension body of inner flange; 33-shaft extension corrugated inner skirt structure; 341-shaft extension protrusion; 342-shaft extension recess; 35-hold-down thread;
41-hold-down ring; 42-hold-down bolt; 43-diaphragm group.

### DETAILED DESCRIPTION

The embodiments of the present disclosure are illustrated below by the specific embodiments. Those skilled in the art can easily understand other advantages and effects of the present disclosure from the content disclosed in this specification. Obviously, the described embodiments are merely part rather than all of the embodiments of the present disclosure. Based on the embodiments of the present disclosure, all other embodiments obtained by those ordinary skilled in the art without making creative effort belong to the protection scope of the present disclosure.

The terms used in the embodiments of the present disclosure are merely for the purpose of describing specific embodiments, rather than limiting the present disclosure. The singular forms "a," "an," and "the" used in the embodiments of the present disclosure and the appended claims are intended to include the plural forms as well, unless the context clearly indicates otherwise. The term "a plurality of" generally includes at least two, but does not exclude the case of including at least one.

It is to be understood that the term "and/or" used herein is merely an association relationship describing associated objects, indicating that there may be three relationships, for embodiment, A and/or B may indicate that three cases, i.e., A existing individually, A and B existing simultaneously, B existing individually. In addition, the character "/" herein generally indicates that the related objects before and after the character form an "or" relationship.

It is also to be noted that the terms "including," "comprising" or any other variations thereof are intended to encompass non-exclusive inclusion, such that an article or a system which includes a series of elements not only includes such elements, but also includes other elements not listed clearly or also includes inherent elements in the article or the system. Under the condition of no more limitation, the elements defined by a sentence "include one..." do not exclude additional identical elements in the article or the system which includes the elements.

In the prior art, when connecting the diaphragm and flange by using pin holes and pin bolts, stress concentration is prone to occur near the pin holes, so the safety and load-bearing capacity per unit volume of a diaphragm coupling are reduced; when connecting the diaphragm and flange by using a welding manner, the welded structure is undetachable, and therefore can merely be scrapped as a whole if individual parts fail. A diaphragm made of high-strength material is often difficult to weld and may crack after welding, or the material strength at the weld seam may significantly decrease.

The present disclosure creatively provides an annular diaphragm, which includes a diaphragm body, one radial end of the diaphragm body being formed with a diaphragm corrugated skirt structure; the diaphragm corrugated skirt structure includes diaphragm skirt protrusions and diaphragm skirt recesses, the diaphragm skirt recesses and the diaphragm skirt protrusions being alternately provided in a circumferential direction of the diaphragm body. A driving object and/or a driven object may be in drive connection with the annular diaphragm through the diaphragm corrugated skirt structure. No stress concentration occurs at the joint, greatly improving the safety, power density and service life of the annular diaphragm. The diaphragm corrugated skirt structure is detachable and is low in maintenance cost.

### Embodiment 1

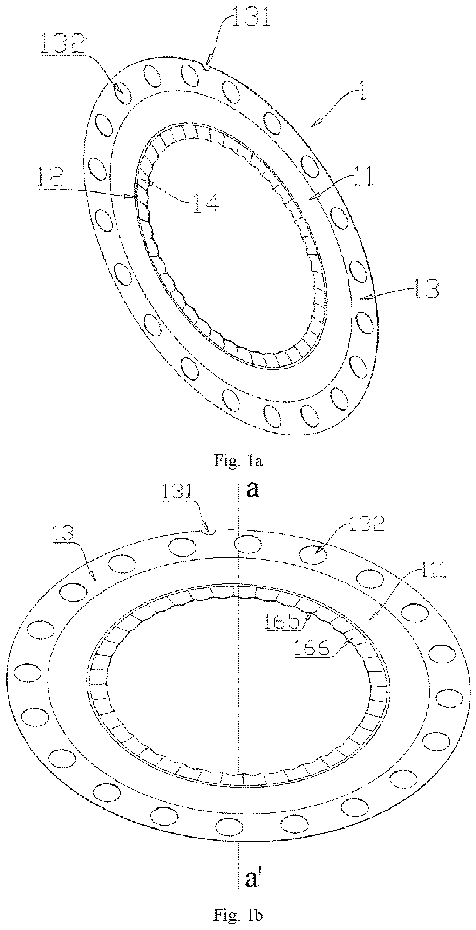

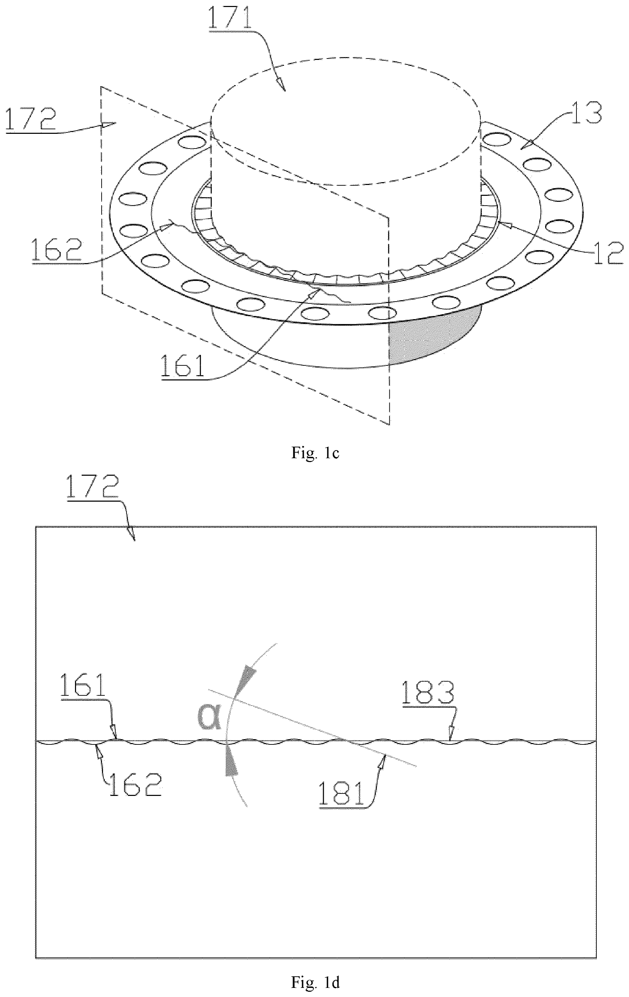

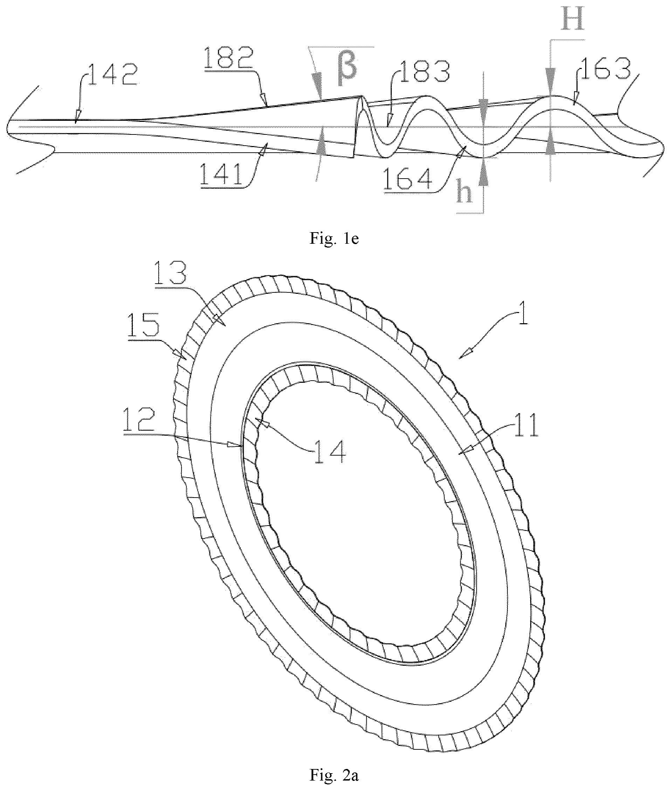

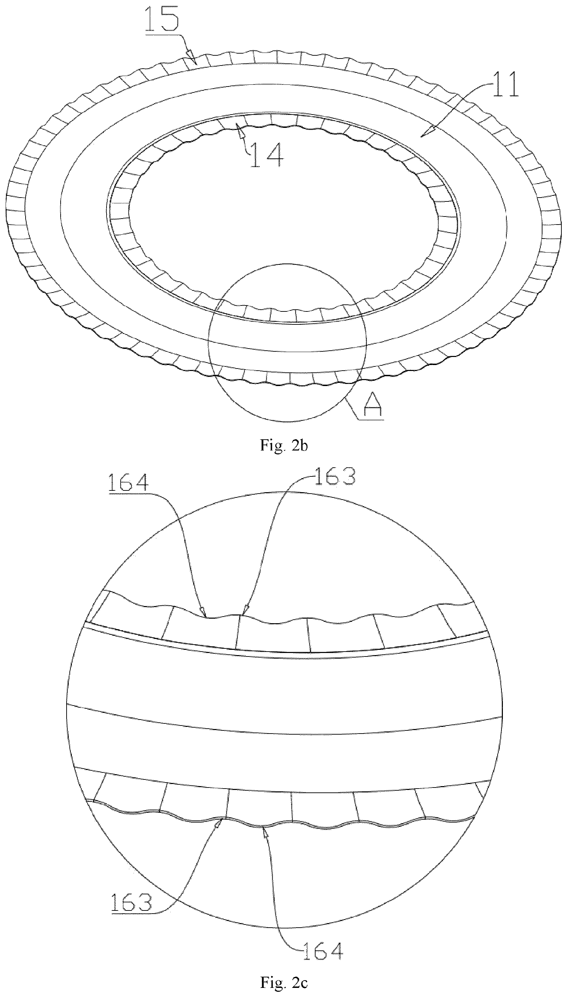

As shown in Figs. 1a to 3, this embodiment provides an annular diaphragm 1, which includes a diaphragm body 11, one radial end of the diaphragm body 11 being formed with a diaphragm corrugated skirt structure, the diaphragm corrugated skirt structure being configured for drive connection with a driving object and/or a driven object; and the diaphragm corrugated skirt structure is formed by calendaring and stretching the radial end of the diaphragm body 11.

The diaphragm corrugated skirt structure is formed with diaphragm skirt protrusions 163 and diaphragm skirt recesses 164 alternately in a circumferential direction of the diaphragm body 11, the diaphragm skirt protrusion 163 protruding towards one axial side of the diaphragm body 11, the diaphragm skirt recess 164 recessing towards the other axial side of the diaphragm body 11. Specifically, a plurality of diaphragm skirt protrusions 163 and a plurality of diaphragm skirt recesses 164 are provided respectively, the plurality of diaphragm skirt protrusions 163 being provided at intervals in the circumferential direction of the diaphragm body 11, the plurality of diaphragm skirt recesses 164 being provided at intervals in the circumferential direction of the diaphragm body 11; the plurality of diaphragm skirt recesses 164 and the plurality of diaphragm skirt protrusions 163 are alternately provided at intervals in the circumferential direction of the diaphragm body 11, and the diaphragm skirt protrusion 163 is tangentially connected with an adjacent diaphragm skirt recess 164.

A convex height H of the diaphragm skirt protrusion 163 and a concave depth h of the diaphragm skirt recess 164 respectively decrease gradually to the diaphragm body 11 in a radial direction of the diaphragm body 11. The convex height H of the diaphragm skirt protrusion 163 is a distance between any point on the diaphragm skirt protrusion163 and a center plane 183 of the diaphragm body, and the concave depth h of the diaphragm skirt recess 164 is a distance between any point on the diaphragm skirt recess 164 and the center plane 183 of the diaphragm body.

Preferably, at any axial side of the diaphragm body 11, a convex surface 165 of the diaphragm skirt protrusion 163 and a concave surface 166 of the diaphragm skirt recess 164 respectively transition gradually and smoothly to a corresponding axial side surface of the diaphragm body 11 in the radial direction of the diaphragm body 11. That is, the diaphragm skirt protrusion 163 and the diaphragm skirt recess 164 gradually extend gently and continuously to the diaphragm body 11 in the radial direction of the diaphragm body 11 respectively. Specifically, the diaphragm body 11 includes a first axial side a and a second axial side a' which are oppositely provided in an axial direction, and an axial side surface of the diaphragm body 11 includes a first axial side surface 111 corresponding to the first axial side a and a second axial side surface corresponding to the second axial side a'. At the first axial side a, the convex surface 165 of the diaphragm skirt protrusion 163 gradually and smoothly transitions to the first axial side surface 111 in the radial direction of the diaphragm body 11, and the concave surface 166 of the diaphragm skirt recess 164 gradually and smoothly transitions to the first axial side surface 111 in the radial direction of the diaphragm body 11. At the second axial side a', the convex surface 165 of the diaphragm skirt protrusion 163 gradually and smoothly transitions to the second axial side surface in the radial direction of the diaphragm body 11, and the concave surface 166 of the diaphragm skirt recess 164 gradually and smoothly transitions to the second axial side surface in the radial direction of the diaphragm body 11.

It is to be noted that the diaphragm corrugated skirt structure is a connection structure which is configured for drive connection and is detachable. When the annular diaphragm 1 is in drive connection with the driving object, the motion of the driving object may be transmitted to the annular diaphragm 1; and when the annular diaphragm 1 is in drive connection with the driven object, the annular diaphragm 1 may transmit the motion to the driven object. In the drive process, a bulge of the diaphragm body 11 is elastically deformable. The diaphragm corrugated skirt structure is different from the common fixed connection structures such as welding, bolt connection, rivet connection, adhesive connection, pin connection structures and the like.

Specifically, the diaphragm body 11 is in a flat plate shape on a whole, or the diaphragm body 11 includes an inner ring segment, a bulge and an outer ring segment which are sequentially provided and connected in the radial direction of the diaphragm body 11 from inside to outside. The bulge is of an annular structure, and the inner ring segment, the bulge and the outer ring segment are coaxially provided, and the bulge protrudes towards one axial end of the diaphragm body 11. The bulge has elasticity, so when the outer ring segment and the inner ring segment deflect, the bulge is deformed, to be able to adapt to the position change due to the relative deflection of the outer ring segment and the inner ring segment. The bulge adopts a pre-stretching structure, which can allow a larger angle difference and provide radial rigidity in the case where both the outer ring segment and the inner ring segment are fixed. The bulge is tangent to both the outer ring segment and the inner ring segment, and the bulge is a circular arc surface, a spline curved surface or a cosine curved surface. Preferably, the bulge, the outer ring segment and the inner ring segment are equal in thickness, and the bulge, the outer ring segment and the inner ring segment are integrally formed, and the inner ring segment and the outer ring segment are located within the same plane.

The specific structure of the diaphragm corrugated skirt structure may be viewed from the circumferential direction and radial direction of the diaphragm body 11.

When viewed from the circumferential direction of the diaphragm body 11, on a cross-section in the circumferential direction of the diaphragm corrugated skirt structure, the diaphragm skirt protrusion 163 is formed with a diaphragm skirt protrusion circumferential contour line 161, and the diaphragm skirt recess 164 is formed with a diaphragm skirt recess circumferential contour line 162.

The specific structures of the diaphragm skirt protrusion circumferential contour line 161 and the diaphragm skirt recess circumferential contour line 162 include the following two cases. In practical applications, either of these two cases can be selected:
(1) in the case where the circumferential cross-section of the diaphragm corrugated skirt structure is unfolded into a plane, both the diaphragm skirt protrusion circumferential contour line 161 and the diaphragm skirt recess circumferential contour line 162 are circular arc lines;
(2) in the case where the circumferential cross-section of the diaphragm corrugated skirt structure is unfolded into a plane, one diaphragm skirt protrusion circumferential contour line 161 and one adjacent diaphragm skirt recess circumferential contour line 162 form a periodic sine curve;
the circumferential cross-section of the diaphragm corrugated skirt structure is a circumferential cross-section formed by cutting off the diaphragm corrugated skirt structure by a cylinder plane provided coaxially with the diaphragm body 11.

When viewed from the radial direction of the diaphragm body 11, the diaphragm corrugated skirt structure includes in the radial direction of the diaphragm body 11 two different corrugated segments, namely a first corrugated segment and a second corrugated segment which are integrally formed, the first corrugated segment being provided away from the diaphragm body 11, the second corrugated segment being provided close to the diaphragm body 11;
in a direction from the first corrugated segment to the second corrugated segment, a corrugation height of the first corrugated segment linearly decreases, and the second corrugated segment is in a circular arc shape; in the first corrugated segment, a corrugation height of the diaphragm skirt protrusion 163 is the convex height H of the diaphragm skirt protrusion 163, and a corrugation height of the diaphragm skirt recess 164 is the concave depth h of the diaphragm skirt recess 164; and
in the radial direction of the diaphragm body 11, the second corrugated segment is tangentially connected with the first corrugated segment, and the second corrugated segment is tangentially connected with the diaphragm body 11.

Parameters related to the specific structures of the diaphragm skirt protrusion163 and the diaphragm skirt recess 164 include α, β, δ and W11/W10. The α is a key parameter that directly affects the service life and connection firmness of the annular diaphragm 1, while the β, δ and W11/W10 affect the swing flexibility and stress during formation of the annular diaphragm 1. Specifically:
(1) An included angle between a tangent plane A 181 at which a diaphragm skirt protrusion 163 and an adjacent diaphragm skirt recess 64 are tangentially connected and a center plane 183 of the diaphragm body is α, which satisfies at the radial end of the diaphragm body: 20°≤α≤35°. If α is reduced, the residual elongation generated at a radial edge of the annular diaphragm 1 may be reduced, such that the annular diaphragm 1 can be prevented from being damaged during stretching and use. If α is increased, under the same torque or radial force, an axial locking force required to clamp the annular diaphragm 1 may be reduced, such that the annular diaphragm 1 may be firmly connected with the flange and the hold-down ring 41.
(2) An included angle between a tangent plane B 182 passing through an outer contour peak line of the diaphragm skirt protrusion 163 and the center plane 183 of the diaphragm body is β, which satisfies: 4.5°≤β≤12°. If β is increased, the radial width of the diaphragm corrugated skirt structure may be reduced, and the radial width of the annular diaphragm 1 between the inner flange 3 and the outer flange, when the annular diaphragm 1 is connected with the inner flange 3 and the outer flange, may be increased, such that the swing flexibility of the annular diaphragm 1 between the inner flange 3 and the outer flange may be improved. If β is reduced, the circular arc radius of the second corrugated segment may be increased, so on the one hand, the stress during formation of the annular diaphragm 1 may be reduced, and on the other hand (when the annular diaphragm 1 is to be connected with the flange and the hold-down ring 41), the diameter range of a cutter used for machining the flange or the hold-down ring 41 may be expanded, such that the efficiency of machining the flange or the hold-down ring 41 may be improved. In the axial direction of the diaphragm body 11, from the center plane 183 of the diaphragm body to the diaphragm skirt protrusion 163, the outer contour peak line of the diaphragm skirt protrusion 163 is provided away from the center plane 183 of the diaphragm body, and an inner contour peak line of the diaphragm skirt protrusion 163 is provided close to the center plane 183 of the diaphragm body.
(3) An included angle between a tangent plane E passing through an outer contour trough line of the diaphragm skirt recess and the center plane 183 of the diaphragm body is δ, which satisfies: 4.5°≤δ≤12°. If δ is increased, the radial width of the diaphragm corrugated skirt structure may be reduced, such that the radial width of the annular diaphragm 1 between the inner flange 3 and the outer flange, when the annular diaphragm 1 is connected with the inner flange 3 and the outer flange, may be increased, such that the swing flexibility of the annular diaphragm 1 between the inner flange 3 and the outer flange may be improved. If δ is reduced, the circular arc radius of the second corrugated segment may be increased, so on the one hand, the stress during formation of the annular diaphragm 1 may be reduced, and on the other hand (when the annular diaphragm 1 is to be connected with the flange and the hold-down ring 41), the diameter range of a cutter used for machining the flange or the hold-down ring 41 may be expanded, such that the efficiency of machining the flange or the hold-down ring 41 may be improved. In the axial direction of the diaphragm body, from the center plane 183 of the diaphragm body to the diaphragm skirt recess 164, the outer contour trough line of the diaphragm skirt recess 164 is provided away from the center plane 183 of the diaphragm body, and an inner contour trough line of the diaphragm skirt recess 164 is provided close to the center plane 183 of the diaphragm body.
(4) The diaphragm corrugated skirt structure has a width of W10 in the radial direction of the diaphragm body 11, the first corrugated segment has a width of W11 in the radial direction of the diaphragm body 11, and the W10 and W11 satisfy: 60%≤W11/W10≤80%. If W11/W10 is reduced, the circular arc radius of the second corrugated segment may be increased, so on the one hand, the stress during formation of the annular diaphragm 1 may be reduced, and on the other hand (when the annular diaphragm 1 is to be connected with the flange and the hold-down ring 41), the diameter range of a cutter used for machining the flange or the hold-down ring 41 may be expanded, such that the efficiency of machining the flange or the hold-down ring 41 may be improved. If W11/W10 is increased, the radial width of the diaphragm corrugated skirt structure may be reduced, such that the swing flexibility of the annular diaphragm 1 between the inner flange 3 and the outer flange may be improved.

In addition, when α satisfies 20°≤α≤35°, while β satisfies 4.5°≤β≤ 12° and/or δ satisfies 4.5°≤δ≤12° and/or W10/W11 satisfies 60%≤W11/W10≤80%, the annular diaphragm 1 may be prevented from being damaged during stretching and use, and the annular diaphragm 1 may be firmly connected with the flange and the hold-down ring 41, and the swing flexibility of the annular diaphragm 1 between the inner flange 3 and the outer flange may be improved, and the stress during formation of the annular diaphragm 1 may be reduced.

This embodiment further proposes that the diaphragm body 11 includes a diaphragm radial inner edge 12 and a diaphragm radial outer edge 13 which are oppositely provided in a radial direction of the diaphragm body 11. The diaphragm corrugated skirt structure is formed at the diaphragm radial inner edge 12 and/or the diaphragm radial outer edge 13. That is, merely the diaphragm radial inner edge 12 is formed with the diaphragm corrugated skirt structure, or merely the diaphragm radial outer edge 13 is formed with the diaphragm corrugated skirt structure, or both the diaphragm radial inner edge 12 and the diaphragm radial outer edge 13 are formed with the diaphragm corrugated skirt structure.

To sum up, this embodiment gives an overall layout and specific structure of the diaphragm corrugated skirt structure, and gives parameters related to the specific structure. Drive connection is achieved through the diaphragm corrugated skirt structure, and no stress concentration occurs at the joint, greatly improving the safety, power density, and service life of the annular diaphragm 1; the diaphragm corrugated skirt structure is detachable and is low in maintenance cost; the stress during formation of the annular diaphragm 1 may be reduced, and the service life of the annular diaphragm 1 may be extended, and the annular diaphragm 1 may be firmly connected.

### Embodiment 2

On the basis of Embodiment 1, merely the diaphragm radial inner edge 12 is formed with a diaphragm corrugated skirt structure, the diaphragm corrugated skirt structure being a diaphragm corrugated inner skirt structure 14, a first corrugated segment of the diaphragm corrugated inner skirt structure 14 being a first inner corrugated segment 141, a second corrugated segment of the diaphragm corrugated inner skirt structure 14 being a second inner corrugated segment 142.

The first inner corrugated segment 141, the second inner corrugated segment 142 and the diaphragm body 11 are sequentially provided in the radial direction of the diaphragm body 11 from inside to outside, and the second inner corrugated segment 142 is tangentially connected with the first inner corrugated segment 141 and the second inner corrugated segment 142 is tangentially connected with the diaphragm body 11. A corrugation height of the first inner corrugated segment 141 linearly decreases in the radial direction of the diaphragm body 11 from inside to outside, and the second inner corrugated segment 142 is in a circular arc shape in the radial direction of the diaphragm body 11 from inside to outside.

The diaphragm corrugated inner skirt structure 14 is tangent to an inner cylinder plane 171 provided coaxially with the diaphragm body 11.

On an unfolded plane of the inner cylinder plane 171, an intersection line between one diaphragm skirt protrusion 163 and the inner cylinder plane 171 is a diaphragm skirt protrusion circumferential contour line 161, and on the unfolded plane of the inner cylinder plane 171, an intersection line between one diaphragm skirt recess 164 and the inner cylinder plane 171 is a diaphragm skirt recess circumferential contour line 162; and
both the diaphragm skirt protrusion circumferential contour line 161 and the diaphragm skirt recess circumferential contour line 162 are circular arc lines, or one diaphragm skirt recess circumferential contour line 162 and one adjacent diaphragm skirt protrusion circumferential contour line 161 form a periodic sine curve;
the unfolded plane of the inner cylinder plane 171 is referred to for short as an inner cylinder unfolded plane 172.

To sum up, this embodiment gives a specific structure of the diaphragm corrugated inner skirt structure 14. The first inner corrugated segment 141, the second inner corrugated segment 142 and the diaphragm body 11 gradually extend gently and continuously in the radial direction of the diaphragm body 11 from inside to outside, reducing the stress during formation of the annular diaphragm 1, while allowing the diaphragm body 11 to have certain elasticity and have certain swing flexibility during use, thus extending the service life of the annular diaphragm 1.

Finite element analysis is performed on the radial inner edge 12 of the diaphragm body 11 being formed with a diaphragm corrugated inner skirt structure 14 and the radial outer edge 13 of the diaphragm body 11 being formed with diaphragm pin holes 132. A geometric model is set as follows: the inner diameter of the diaphragm is set to 39 mm; the radial width of the diaphragm corrugated inner skirt structure 14 is set to 1.85 mm; 40 diaphragm skirt protrusions 163 and 40 diaphragm skirt recesses 164 are provided respectively; the thickness of the diaphragm body 11 is set to 0.1 mm; α=26.552°; β=6.558°; W11/W10=70%; the fillet radius of the diaphragm skirt protrusion is set to 4.86 mm; the innermost circular arc radius of the first corrugated segment is set to 1.7131 mm (that is, when the innermost circumferential cross-section of the first corrugated segment is unfolded into a plane, both the diaphragm skirt protrusion circumferential contour line 161 and the diaphragm skirt recess circumferential contour line 162 are circular arc lines, and the circular arc lines have a radius of 1.7131 mm); elongation of material generated by stamping the diaphragm corrugated inner skirt structure 14 is set to 4.7%, which is less than half of the elongation of material of the annular diaphragm 1. Simulation conditions are set as follows: a deflection angle of an inner ring segment relative to an outer ring segment is 0.74°, and a torque of 56 Nm and a radial force of 1520 N are applied between the inner ring segment and the outer ring segment; the radial force is consistent with the relative inclination direction of the inner ring segment and the outer ring segment, that is, perpendicular to the common normal line of the axis of the inner ring segment and the outer ring segment.

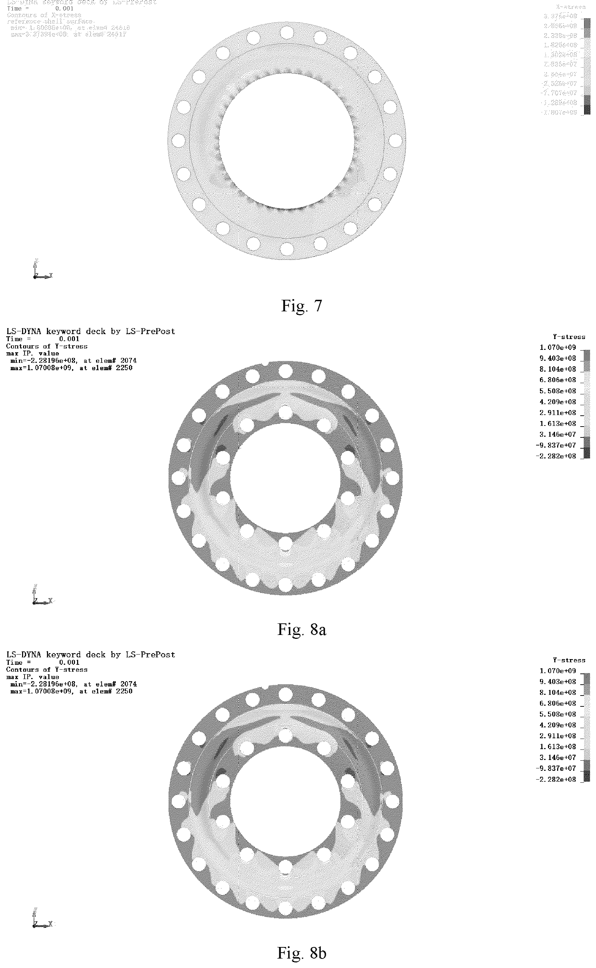

Fig. 7 is a cloud diagram obtained through mechanical finite element analysis. It can be seen from Fig. 7 that the maximum tensile stress of the diaphragm body 11 is 337.4 Mpa, and the maximum stress at the diaphragm corrugated inner skirt structure 14 is 298.4 Mpa.

Finite element analysis is performed on the radial inner edge 12 and the radial outer edge 13 of the diaphragm body 11 which are both formed with diaphragm pin holes 132. A geometric model is set as follows: the inner diameter of the diaphragm body 11 is set to 44.7 mm, and the thickness of the diaphragm body 11 is set to 0.1 mm; the inner diameter of the flange plate connected with the radial inner edge 12 of the diaphragm body 11 is set to 32 mm, and the flange plate is formed with 10 evenly distributed flange plate pin holes; the diameter of both the diaphragm pin holes 132 and the flange plate pin holes is set to 4 mm. Simulation conditions are set as follows: a deflection angle of an inner ring segment relative to an outer ring segment is 0.74°, and a torque of 56 Nm and a radial force of 1520 N are applied between the inner ring segment and the outer ring segment; the radial force is consistent with the relative inclination direction of the inner ring segment and the outer ring segment, that is, perpendicular to the common normal line of the axis of the inner ring segment and the outer ring segment.

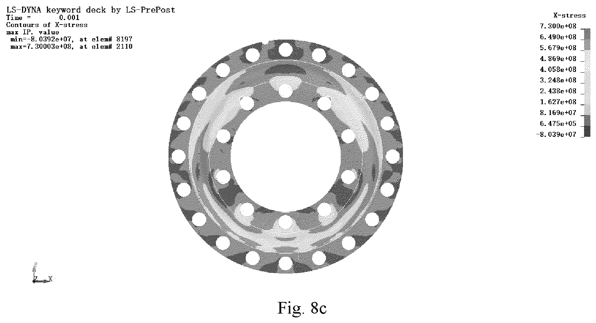

Figs. 8a, 8b, and 8c are cloud diagrams obtained through mechanical finite element analysis. It can be seen from Fig. 8a that the maximum tensile stress of the diaphragm body 11 is 1070 Mpa, and the maximum tensile stress of the diaphragm body 11 in the X direction is 730.0 Mpa, and the maximum stress at the radial inner edge 12 of the diaphragm body 11 is 1070 Mpa.

From this, it can be seen that the maximum stress when the diaphragm corrugated inner skirt structure 14 is formed at the radial inner edge 12 of the diaphragm body 11 is significantly less than that when the diaphragm pin hole 132 is formed at the radial inner edge 12 of the diaphragm body 11, so that the stress is reduced from 1070 Mpa to 298.4 Mpa, which is less than 28% of the original stress. This significantly improves the stress characteristics of the diaphragm body 11, and increases the expected cycle life from tens of thousands of times to infinite cycle life, meeting the design and use requirements of reducers (especially reducers used in robots).

### Embodiment 3

On the basis of Embodiment 1, merely the diaphragm radial outer edge 13 is formed with a diaphragm corrugated skirt structure, the diaphragm corrugated skirt structure being a diaphragm corrugated outer skirt structure 15, a first corrugated segment of the diaphragm corrugated outer skirt structure 15 being a first outer corrugated segment 151, a second corrugated segment of the diaphragm corrugated outer skirt structure 15 being a second outer corrugated segment 152.

The first outer corrugated segment 151, the second outer corrugated segment 152 and the diaphragm body 11 are sequentially provided in the radial direction of the diaphragm body 11 from outside to inside, and the second outer corrugated segment 152 is tangentially connected with the first outer corrugated segment 151 and the second outer corrugated segment 152 is tangentially connected with the diaphragm body 11. A corrugation height of the first outer corrugated segment 151 linearly decreases in the radial direction of the diaphragm body 11 from outside to inside, and the second outer corrugated segment 152 is in a circular arc shape in the radial direction of the diaphragm body 11 from inside to outside.

The diaphragm corrugated outer skirt structure 15 is tangent to an outer cylinder plane provided coaxially with the diaphragm body 11.

On an unfolded plane of the outer cylinder plane, an intersection line between one diaphragm skirt protrusion 163 and the outer cylinder plane is a diaphragm skirt protrusion circumferential contour line 161, and on the unfolded plane of the outer cylinder plane, an intersection line between one diaphragm skirt recess 164 and the outer cylinder plane is a diaphragm skirt recess circumferential contour line 162; and
both the diaphragm skirt protrusion circumferential contour line 161 and the diaphragm skirt recess circumferential contour line 162 are circular arc lines, or one diaphragm skirt recess circumferential contour line 162 and one adjacent diaphragm skirt protrusion circumferential contour line 161 form a periodic sine curve;
the unfolded plane of the outer cylinder plane is referred to for short as an outer cylinder unfolded plane.

To sum up, this embodiment gives a specific structure of the diaphragm corrugated outer skirt structure 15. The first outer corrugated segment 151, the second outer corrugated segment 152 and the diaphragm body 11 gradually extend gently and continuously in the radial direction of the diaphragm body 11 from outside to inside, reducing the stress during formation of the annular diaphragm 1, while allowing the diaphragm body 11 to have certain elasticity and have certain swing flexibility during use, thus extending the service life of the annular diaphragm 1.

### Embodiment 4

On the basis of Embodiment 1, Embodiment 2 and Embodiment 3, both the diaphragm radial inner edge 12 and the diaphragm radial outer edge are formed with the diaphragm corrugated skirt structure. The diaphragm corrugated skirt structure formed at the diaphragm radial inner edge 12 is a diaphragm corrugated inner skirt structure 14, a first corrugated segment of the diaphragm corrugated inner skirt structure 14 being a first inner corrugated segment 141, a second corrugated segment of the diaphragm corrugated inner skirt structure 14 being a second inner corrugated segment 142. The first inner corrugated segment 141, the second inner corrugated segment 142 and the diaphragm body 11 are sequentially provided in the radial direction of the diaphragm body 11 from inside to outside, and the second inner corrugated segment 142 is tangentially connected with the first inner corrugated segment 141 and the second inner corrugated segment 142 is tangentially connected with the diaphragm body 11. A corrugation height of the first inner corrugated segment 141 linearly decreases in the radial direction of the diaphragm body 11 from inside to outside.

The diaphragm corrugated skirt structure formed at the diaphragm radial outer edge 13 is a diaphragm corrugated outer skirt structure 15, a first corrugated segment of the diaphragm corrugated outer skirt structure 15 being a first outer corrugated segment 151, a second corrugated segment of the diaphragm corrugated outer skirt structure 15 being a second outer corrugated segment 152. The first outer corrugated segment 151, the second outer corrugated segment 152 and the diaphragm body 11 are sequentially provided in the radial direction of the diaphragm body 11 from outside to inside, and the second outer corrugated segment 152 is tangentially connected with the first outer corrugated segment 151 and the second outer corrugated segment 152 is tangentially connected with the diaphragm body 11. A corrugation height of the first outer corrugated segment 151 linearly decreases in the radial direction of the diaphragm body 11 from outside to inside.

To sum up, this embodiment gives specific structures of the diaphragm corrugated inner skirt structure 14 and the diaphragm corrugated outer skirt structure 15. The first inner corrugated segment 141, the second inner corrugated segment 142 and the diaphragm body 11 gradually extend gently and continuously in the radial direction of the diaphragm body 11 from inside to outside, while the first outer corrugated segment 151, the second outer corrugated segment 152 and the diaphragm body 11 gradually extend gently and continuously in the radial direction of the diaphragm body 11 from outside to inside, reducing the stress during formation of the annular diaphragm 1, while allowing the diaphragm body 11 to have certain elasticity and have certain swing flexibility during use, thus extending the service life of the annular diaphragm 1.

### Embodiment 5

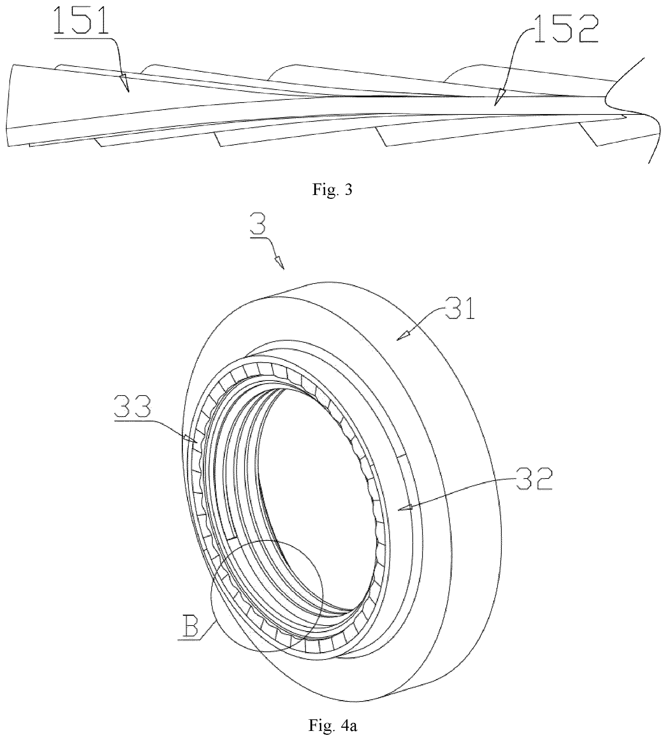

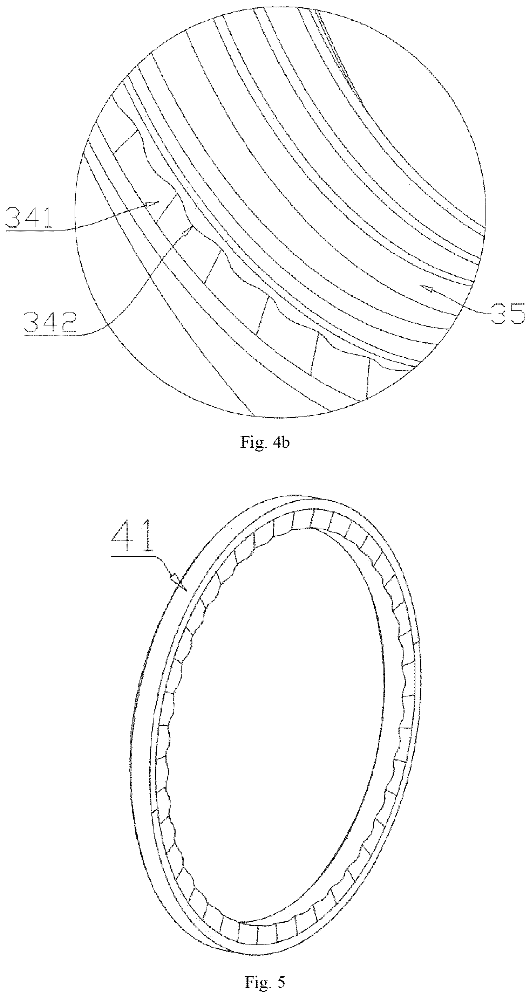

As shown in Figs. 4a and 4b, this embodiment provides a flange, which includes a flange plate and a shaft extension, the shaft extension being provided at one axial end of the flange plate; the shaft extension includes a shaft extension body, the shaft extension body being formed with a shaft extension corrugated skirt structure; the shaft extension corrugated skirt structure is away from the flange plate and is located at one radial end of the shaft extension body; and the shaft extension corrugated skirt structure has a structure matched with the diaphragm corrugated skirt structure of any one of Embodiments 1 to 4.

The diaphragm corrugated skirt structure is matched with the shaft extension corrugated skirt structure, which can realize the connection between the annular diaphragm 1 and the flange.

### Embodiment 6

As shown in Figs. 4a and 4b, this embodiment provides a flange, which includes a flange plate and a shaft extension, the shaft extension being provided at one axial end of the flange plate; the shaft extension includes a shaft extension body, the shaft extension body being formed with a shaft extension corrugated skirt structure; the shaft extension corrugated skirt structure is away from the flange plate and is located at one radial end of the shaft extension body; the shaft extension corrugated skirt structure is configured for drive connection with a driving object and/or a driven object, and the shaft extension corrugated skirt structure is formed by performing cutting machining, pressure machining or electric machining on the radial end of the shaft extension body.

The shaft extension corrugated skirt structure is formed with shaft extension protrusions 341 and shaft extension recesses 342 alternately in a circumferential direction of the shaft extension body, the shaft extension protrusion 341 protruding towards one axial side of the shaft extension body, the shaft extension recess 342 recessing towards the other axial side of the shaft extension body. A plurality of shaft extension protrusions 341 and a plurality of shaft extension recesses 342 are provided respectively, and the plurality of shaft extension recesses 342 and the plurality of shaft extension protrusions 341 are alternately provided at intervals in the circumferential direction of the shaft extension body.

The shaft extension protrusions 341 and the shaft extension recesses 342 respectively transition gradually and smoothly to the shaft extension body in a radial direction of the shaft extension body.

The specific structure of the shaft extension corrugated skirt structure may be viewed from the circumferential direction and radial direction of the shaft extension body.

When viewed from the circumferential direction of the shaft extension body, on a longitudinal cross-section in a circumferential direction of the shaft extension corrugated skirt structure, the shaft extension protrusion 341 is formed with a shaft extension protrusion circumferential contour line, and the shaft extension recess 342 is formed with a shaft extension recess circumferential contour line.

The specific structures of the shaft extension protrusion circumferential contour line and the shaft extension recess circumferential contour line include the following two cases. In practical applications, either of these two cases can be selected:
(1) in the case where the circumferential cross-section of the shaft extension corrugated skirt structure is unfolded into a plane, both the shaft extension protrusion circumferential contour line and the shaft extension recess circumferential contour line are circular arc lines;
(2) in the case where the circumferential cross-section of the shaft extension corrugated skirt structure is unfolded into a plane, one shaft extension protrusion circumferential contour line and one adjacent shaft extension recess circumferential contour line form a periodic sine curve;
the circumferential cross-section of the shaft extension corrugated skirt structure is a circumferential cross-section formed by cutting off the shaft extension corrugated skirt structure by a cylinder plane provided coaxially with the shaft extension body.

When viewed from the radial direction of the shaft extension body, the shaft extension corrugated skirt structure includes in the radial direction of the shaft extension body two different corrugated segments, namely a third corrugated segment and a fourth corrugated segment which are integrally formed, the third corrugated segment being provided away from the shaft extension body, the fourth corrugated segment being provided close to the shaft extension body;
in a direction from the third corrugated segment to the fourth corrugated segment, a corrugation height of the third corrugated segment linearly decreases, and the fourth corrugated segment is in a circular arc shape; and
in the radial direction of the shaft extension body, the third corrugated segment is tangentially connected with the fourth corrugated segment, and the third corrugated segment is tangentially connected with the shaft extension body.

Parameters related to the specific structures of the shaft extension protrusion 341 and the shaft extension recess 342 include γ, θ, and W21/W20. The γ is a key parameter that directly affects the firmness of connection between the shaft extension body and the annular diaphragm 1. Specifically:
(1) A shaft extension protrusion 341 is tangentially connected with an adjacent shaft extension recess 342, and an included angle between a tangent plane C at which the both are tangentially connected and a center plane of the shaft extension body is γ, which satisfies 20°≤γ≤35°. If γ is reduced, the residual elongation generated at the radial edge of the annular diaphragm matched with the shaft extension body may be reduced, such that the annular diaphragm 1 matched with the shaft extension body may be prevented from being damaged during stretching and use. If γ is increased, under the same torque or radial force, an axial locking force required to clamp the annular diaphragm 1 may be reduced, such that the annular diaphragm 1 may be firmly connected with the flange and the hold-down ring 41.
(2) An included angle between a tangent plane D passing through an outer contour peak line of the shaft extension protrusion 341 and the center plane of the shaft extension body is θ, which satisfies: 4.5°≤θ≤12°. If θ is increased, the radial width of the shaft extension corrugated skirt structure may be reduced, and the radial width of the annular diaphragm 1 between the inner flange 3 and the outer flange, when the annular diaphragm 1 is connected with the inner flange 3 and the outer flange, may be increased, such that the swing flexibility of the annular diaphragm 1 between the inner flange 3 and the outer flange may be improved. If θ is reduced, the circular arc radius of the fourth corrugated segment may be increased, so on the one hand, the stress during formation of the annular diaphragm 1 matched with the shaft extension body may be reduced, and on the other hand (when the annular diaphragm 1 is to be connected with the flange and the hold-down ring 41), the diameter range of a cutter used for machining the flange or the hold-down ring 41 may be expanded, such that the efficiency of machining the flange or the hold-down ring 41 may be improved. In an axial direction of the shaft extension body, from the center plane of the shaft extension body to the shaft extension protrusion, the outer contour peak line of the shaft extension protrusion 341 is provided away from the center plane of the shaft extension body, and an inner contour peak line of the shaft extension recess 342 is provided close to the center plane of the shaft extension body.
(3) The shaft extension corrugated skirt structure has a width of W20 in the radial direction of the shaft extension body, and the third corrugated segment has a width of W21 in the radial direction of the shaft extension body, and the W20 and W21 satisfy: 60%≤W21/W20≤80%. If W21/W20 is reduced, the circular arc radius of the fourth corrugated segment may be increased, so on the one hand, the stress during formation of the annular diaphragm 1 matched with the shaft extension body may be reduced, and on the other hand (when the annular diaphragm 1 is to be connected with the flange and the hold-down ring 41), the diameter range of a cutter used for machining the flange or the hold-down ring 41 may be expanded, such that the efficiency of machining the flange or the hold-down ring 41 may be improved. If W21/W20 is increased, the radial width of the shaft extension corrugated skirt structure may be reduced, such that the swing flexibility of the annular diaphragm 1 between the inner flange 3 and the outer flange may be improved.

In addition, when γ satisfies 20°≤γ≤35°, and θ satisfies 4.5°≤θ≤12° and/or W20/W21 satisfies 60%≤W21/W20≤80%, the annular diaphragm 1 matched with the shaft extension body may be prevented from being damaged during stretching and use, and the annular diaphragm 1 may be firmly connected with the flange and the hold-down ring 41, and the swing flexibility of the annular diaphragm 1 between the inner flange 3 and the outer flange may be improved.

This embodiment further proposes that the shaft extension body includes a shaft extension radial inner edge and a shaft extension radial outer edge. The shaft extension corrugated skirt structure is formed at the shaft extension radial inner edge and/or the shaft extension radial outer edge. That is, merely the shaft extension radial inner edge is formed with the shaft extension corrugated skirt structure, or merely the shaft extension radial outer edge is formed with the shaft extension corrugated skirt structure, or both the shaft extension radial inner edge and the shaft extension radial outer edge are formed with the shaft extension corrugated skirt structure.

To sum up, this embodiment gives an overall layout and specific structure of the shaft extension corrugated skirt structure, and gives parameters related to the specific structure. Drive connection is achieved through the shaft extension corrugated skirt structure, and no stress concentration occurs at the joint, greatly improving the safety, power density, and service life of the shaft extension body; the diaphragm corrugated skirt structure is detachable and is low in maintenance cost; the stress during formation of the annular diaphragm 1 matched with the shaft extension body may be reduced, and the service life of the annular diaphragm 1 matched with the shaft extension body may be extended, and the shaft extension body and the annular diaphragm 1 may be firmly connected.

### Embodiment 7

On the basis of Embodiment 5 or Embodiment 6, merely the shaft extension radial inner edge is formed with a shaft extension corrugated skirt structure, the shaft extension corrugated skirt structure being a shaft extension corrugated inner skirt structure 33; a third corrugated segment of the shaft extension corrugated inner skirt structure 33 is a third inner corrugated segment, and a fourth corrugated segment of the shaft extension corrugated inner skirt structure 33 is a fourth inner corrugated segment.

The third inner corrugated segment, the fourth inner corrugated segment and the shaft extension body are sequentially provided in the radial direction of the shaft extension body from inside to outside; a corrugation height of the third inner corrugated segment linearly decreases in the radial direction of the shaft extension body from inside to outside.

To sum up, this embodiment gives a specific structure of the shaft extension corrugated inner skirt structure 33. The third inner corrugated segment, the fourth inner corrugated segment and the shaft extension body gradually extend gently and continuously in the radial direction of the shaft extension body from inside to outside, reducing the stress during formation of the annular diaphragm 1 matched with the shaft extension body, thus extending the service life of the annular diaphragm 1 matched with the shaft extension body.

### Embodiment 8

On the basis of Embodiment 5 or Embodiment 6, merely the shaft extension radial outer edge is formed with a shaft extension corrugated skirt structure, the shaft extension corrugated skirt structure being a shaft extension corrugated outer skirt structure; a third corrugated segment of the shaft extension corrugated outer skirt structure is a third outer corrugated segment, and a fourth corrugated segment of the shaft extension corrugated outer skirt structure is a fourth outer corrugated segment.

The third outer corrugated segment, the fourth outer corrugated segment and the shaft extension body are sequentially provided in the radial direction of the shaft extension body from outside to inside; a corrugation height of the third outer corrugated segment linearly decreases in the radial direction of the shaft extension body from outside to inside.

To sum up, this embodiment gives a specific structure of the shaft extension corrugated outer skirt structure. The third outer corrugated segment, the fourth outer corrugated segment and the shaft extension body gradually extend gently and continuously in the radial direction of the shaft extension body from outside to inside, reducing the stress during formation of the annular diaphragm 1 matched with the shaft extension body, thus extending the service life of the annular diaphragm 1 matched with the shaft extension body.

### Embodiment 9

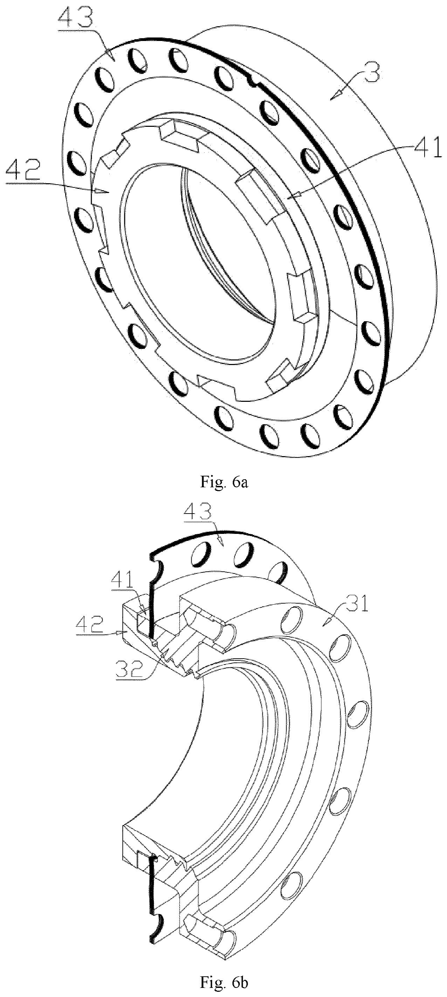

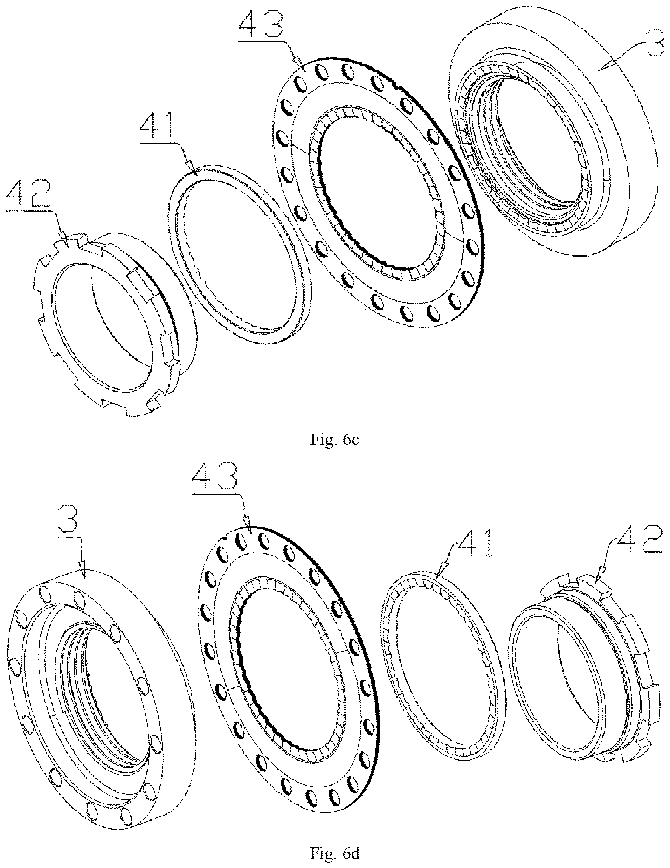

As shown in Figs. 5 to 6d, this embodiment provides a drive connection component, which includes an annular diaphragm 1 and an inner flange 3, the annular diaphragm 1 being the annular diaphragm 1 in Embodiment 2, the inner flange 3 being the flange in Embodiment 7;
the radial outer edge of the diaphragm body 11 is formed with diaphragm pin holes 132; the inner flange 3 includes an inner flange plate 31 and a shaft extension body, the shaft extension body of the inner flange 3 being provided at one axial end of the inner flange plate 31; a radial inner edge of the shaft extension body of the inner flange 3 is formed with a shaft extension corrugated skirt structure, and an inner side of the shaft extension body of the inner flange 3 is formed with hold-down threads 35.

The drive connection component further includes an outer flange, the outer flange including an outer flange plate, the outer flange plate being formed with outer flange pin holes.

The diaphragm skirt protrusion 163 of the diaphragm corrugated inner skirt structure 14 is matched with the shaft extension recess 342 of the shaft extension corrugated inner skirt structure 33, and the diaphragm skirt recess 164 of the diaphragm corrugated inner skirt structure 14 is matched with the shaft extension protrusion 341 of the shaft extension corrugated inner skirt structure 33, and the diaphragm pin hole 132 is matched with the outer flange pin hole, so that the annular diaphragm 1 can be connected with the inner flange 3 and the outer flange.

Since the circumference of the diaphragm radial inner edge 12 is much smaller than that of the diaphragm radial outer edge 13, and the flange plate radius of the inner flange 3 is also much smaller than that of the outer flange, the shear stress per unit length of the diaphragm radial inner edge 12 is much higher than that per unit length of the diaphragm radial outer edge 13. Therefore, the mode of connection between the diaphragm radial inner edge 12 and the inner flange 3 is usually a key factor for the reliability and load-bearing capacity of the annular diaphragm 1. The diaphragm corrugated inner skirt structure 14 can significantly improve the overall reliability and load-bearing capacity of the annular diaphragm 1. The diaphragm radial outer edge 13 is formed with diaphragm pin holes 132, so even though there is significant stress concentration at the diaphragm pin holes 132, the impact on the overall reliability and load-bearing capacity of the annular diaphragm 1 is limited. Thus, the diaphragm radial inner edge 12 and the inner flange 3 are connected by a corrugated skirt structure, resulting in a significant improvement in performance; the diaphragm radial outer edge 13 and the outer flange are connected by adopting traditional diaphragm pin holes 132 and pin bolts, so the simple structure can still maintain reliable connection.

The drive connection component further includes a hold-down ring 41 and a hold-down bolt 42, a corrugated skirt structure being formed at one axial end of the hold-down ring 41, the hold-down bolt 42 including a hold-down segment and a threaded segment. When the annular diaphragm 1 is to be connected with the inner flange 3, the inner flange 3 is provided at one axial end of the annular diaphragm 1, so that the shaft extension corrugated inner skirt structure 33 is matched with the diaphragm corrugated inner skirt structure 14; the hold-down ring 41 is provided at the other axial end of the annular diaphragm 1, so that a corrugated skirt structure of the hold-down ring 41 is matched with the diaphragm corrugated inner skirt structure 14; the threaded segment is threaded through the hold-down ring 41 and the annular diaphragm 1, and the hold-down bolt 42 is connected with the hold-down threads 35, the hold-down segment being located at the end of the hold-down ring 41 away from the inner flange 3 and the hold-down segment being abutted against the hold-down ring 41, so that the annular diaphragm 1 is connected with the inner flange 3.

According to actual needs, a plurality of annular diaphragms 1 may be stacked together and positioned through a positioning hole 131 to form a diaphragm group 43. When the diaphragm group 43 is to be connected with the inner flange 3, the inner flange 3 is provided at one axial end of the diaphragm group 43, so that the shaft extension corrugated inner skirt structure 33 is matched with the diaphragm corrugated inner skirt structure 14; the hold-down ring 41 is provided at the other axial end of the diaphragm group 43, so that the corrugated skirt structure of the hold-down ring 41 is matched with the diaphragm corrugated inner skirt structure 14; the threaded segment is threaded through the hold-down ring 41 and the diaphragm group 43, and the threaded segment is connected with the hold-down threads 35, the hold-down segment being located at the end of the hold-down ring 41 away from the inner flange 3 and the hold-down segment being abutted against the hold-down ring 41, so that the diaphragm group 43 is connected with the inner flange 3.

To sum up, in this embodiment, connection between the annular diaphragm 1 and the inner flange 3 is realized by the matching of the diaphragm corrugated inner skirt structure 14 and the shaft extension corrugated inner skirt structure 33, which significantly improves the overall reliability and load-bearing capacity of the annular diaphragm 1, and connection between the annular diaphragm 1 and the outer flange is realized by the matching of the diaphragm pin holes 132 and the outer flange pin holes, which maintains reliable connection.

### Embodiment 10

This embodiment provides a drive connection component, which includes an annular diaphragm 1 and a flange, the annular diaphragm 1 being the annular diaphragm 1 in Embodiment 4, the flange including an inner flange 3 and an outer flange, the inner flange 3 being the flange in Embodiment 7, the outer flange being the flange in Embodiment 8;
both the radial inner edge and the radial outer edge of the diaphragm body 11 are formed with the diaphragm corrugated skirt structure; the diaphragm corrugated skirt structure formed at the radial inner edge of the diaphragm body 11 is a diaphragm corrugated inner skirt structure 14, and the diaphragm corrugated skirt structure formed at the radial outer edge of the diaphragm body 11 is a diaphragm corrugated outer skirt structure 15;
the flange includes an inner flange 3 and an outer flange, the inner flange 3 including an inner flange plate 31 and a shaft extension body, the shaft extension body of the inner flange 3 being provided at one axial end of the inner flange plate 31; a radial inner edge of the shaft extension body of the inner flange 3 is formed with a shaft extension corrugated skirt structure which is the shaft extension corrugated inner skirt structure 33; the outer flange includes an outer flange plate and a shaft extension body, a radial outer edge of the shaft extension body of the outer flange being formed with a shaft extension corrugated skirt structure which is the shaft extension corrugated outer skirt structure; and
the diaphragm skirt protrusion 163 of the diaphragm corrugated inner skirt structure 14 is matched with the shaft extension recess 342 of the shaft extension corrugated inner skirt structure 33, and the diaphragm skirt recess 164 of the diaphragm corrugated inner skirt structure 14 is matched with the shaft extension protrusion 341 of the shaft extension corrugated inner skirt structure 33, and the diaphragm skirt protrusion 163 of the diaphragm corrugated outer skirt structure 15 is matched with the shaft extension recess 342 of the shaft extension corrugated outer skirt structure, and the diaphragm skirt recess 164 of the diaphragm corrugated outer skirt structure 15 is matched with the shaft extension protrusion 341 of the shaft extension corrugated outer skirt structure, so that the annular diaphragm 1 can be connected with the inner flange 3 and the outer flange.

The diaphragm radial inner edge 12 and the inner flange 3 are connected by a corrugated skirt structure, and the diaphragm radial outer edge 13 and the outer flange are connected by a corrugated skirt structure, so the stress at the diaphragm radial inner edge 12 and the diaphragm radial outer edge 13 is small, and the overall reliability, load-bearing capacity and power density of the annular diaphragm 1 are high.

The drive connection component further includes a hold-down ring 41, a hold-down bolt 42 and a hold-down nut, the hold-down ring 41 including an outer hold-down ring and an inner hold-down ring, one axial end of the outer hold-down ring and one axial end of the inner hold-down ring being each formed with a corrugated skirt structure; and the hold-down bolt 42 and the hold-down nut each includes a hold-down segment and a threaded segment.

When the annular diaphragm 1 is to be connected with the inner flange 3, the inner flange 3 is provided at one axial end of the annular diaphragm 1, so that the shaft extension corrugated inner skirt structure 33 is matched with the diaphragm corrugated inner skirt structure 14; the inner hold-down ring is provided at the other axial end of the annular diaphragm 1, so that the corrugated skirt structure of the inner hold-down ring is matched with the diaphragm corrugated inner skirt structure 14; the threaded segment of the hold-down bolt 42 is threaded through the inner hold-down ring and the annular diaphragm 1, and the threaded segment of the hold-down bolt 42 is connected with the hold-down threads 35 of the inner flange 3, the hold-down segment of the hold-down bolt 42 being located at the end of the inner hold-down ring away from the inner flange 3 and the hold-down segment of the hold-down bolt 42 being abutted against the inner hold-down ring, so that the annular diaphragm 1 is connected with the inner flange 3.

When the annular diaphragm 1 is to be connected with the outer flange, the outer flange is provided at one axial end of the annular diaphragm 1, so that the shaft extension corrugated outer skirt structure is matched with the diaphragm corrugated outer skirt structure 15; the outer hold-down ring is provided at the other axial end of the annular diaphragm 1, so that the corrugated skirt structure of the outer hold-down ring is matched with the diaphragm corrugated outer skirt structure 15; the threaded segment of the hold-down nut is sleeved onto the outer hold-down ring and the annular diaphragm 1, and the threaded segment of the hold-down nut is connected with the hold-down threads of the outer flange, the hold-down segment of the hold-down nut being located at the end of the outer hold-down ring away from the outer flange and the hold-down segment of the hold-down nut being abutted against the outer hold-down ring, so that the annular diaphragm 1 is connected with the outer flange.

According to actual needs, a plurality of annular diaphragms 1 may be stacked together and positioned through a positioning hole 131 to form a diaphragm group 43. The diaphragm group 43 is connected with the inner flange 3 and the outer flange.

To sum up, this embodiment gives that the connection between the annular diaphragm 1 and the inner flange 3 may be realized by the matching of the diaphragm corrugated inner skirt structure 14 and the shaft extension corrugated inner skirt structure 33, and that the connection between the annular diaphragm 1 and the outer flange may be realized by the matching of the diaphragm corrugated outer skirt structure 15 and the shaft extension corrugated outer skirt structure, so the overall reliability and load-bearing capacity of the annular diaphragm 1 can be significantly improved.

Illustrative embodiments of the present disclosure are specifically illustrated and described above. It is to be understandable that the present disclosure is not limited to the detailed structure, arrangement, or implementation method described herein. On the contrary, the present disclosure is intended to encompass various modifications and equivalent arrangements contained within the protection scope of the appended claims.

## Claims

1. An annular diaphragm (1), comprising: a diaphragm body (11), wherein one radial end of the diaphragm body (11) is formed with a diaphragm corrugated skirt structure, the diaphragm corrugated skirt structure being configured for drive connection with a driving object and/or a driven object;
the diaphragm corrugated skirt structure is formed with diaphragm skirt protrusions (163) and diaphragm skirt recesses (164) alternately in a circumferential direction of the diaphragm body (11), wherein the diaphragm skirt protrusion (163) protrudes towards one axial side of the diaphragm body (11), and the diaphragm skirt recess (164) recesses towards the other axial side of the diaphragm body (11); and
a convex height of the diaphragm skirt protrusion (163) and a concave depth of the diaphragm skirt recess (164) respectively decrease gradually to the diaphragm body (11) in a radial direction of the diaphragm body (11).

2. The annular diaphragm (1) according to claim 1, wherein at any axial side of the diaphragm body (11), a convex surface (165) of the diaphragm skirt protrusion (163) and a concave surface (166) of the diaphragm skirt recess (164) respectively transition gradually and smoothly to a corresponding axial side surface of the diaphragm body (11) in the radial direction of the diaphragm body (11).

3. The annular diaphragm (1) according to claim 1, wherein on a cross-section in the circumferential direction of the diaphragm corrugated skirt structure, the diaphragm skirt protrusion (163) is formed with a diaphragm skirt protrusion circumferential contour line (161), and the diaphragm skirt recess (164) is formed with a diaphragm skirt recess circumferential contour line (162); and
in the case where the circumferential cross-section of the diaphragm corrugated skirt structure is unfolded into a plane, both the diaphragm skirt protrusion circumferential contour line (161) and the diaphragm skirt recess circumferential contour line (162) are circular arc lines, or one diaphragm skirt protrusion circumferential contour line (161) and one adjacent diaphragm recess circumferential contour line (162) form a periodic sine curve;
wherein the circumferential cross-section of the diaphragm corrugated skirt structure is a circumferential cross-section formed by cutting off the diaphragm corrugated skirt structure by a cylinder plane provided coaxially with the diaphragm body (11).

4. The annular diaphragm (1) according to claim 1, wherein the diaphragm corrugated skirt structure comprises in the radial direction of the diaphragm body (11) a first corrugated segment and a second corrugated segment, wherein the first corrugated segment is provided away from the diaphragm body (11), and the second corrugated segment is provided close to the diaphragm body (11);
in a direction from the first corrugated segment to the second corrugated segment, a corrugation height of the first corrugated segment linearly decreases; and
in the radial direction of the diaphragm body (11), the second corrugated segment is tangentially connected with the first corrugated segment, and the second corrugated segment is tangentially connected with the diaphragm body (11).

5. The annular diaphragm (1) according to claim 1, wherein the diaphragm corrugated skirt structure is formed by calendaring and stretching one radial end of the diaphragm body (11).

6. The annular diaphragm (1) according to claim 1, wherein the diaphragm skirt protrusion (163) is tangentially connected with an adjacent diaphragm skirt recess (164), and an included angle between a tangent plane A (181) at which the diaphragm skirt protrusion (163) and the adjacent diaphragm skirt recess (164) are tangentially connected and a center plane (183) of the diaphragm body is α, which satisfies at the radial end of the diaphragm body (11): 20°≤α≤35°; and/or
an included angle between a tangent plane B (182) passing through an outer contour peak line of the diaphragm skirt protrusion (163) and the center plane (183) of the diaphragm body is β, which satisfies: 4.5°≤β≤12°, wherein in an axial direction of the diaphragm body (11), from the center plane (183) of the diaphragm body (11) to the diaphragm skirt protrusion (163), the outer contour peak line of the diaphragm skirt protrusion (163) is provided away from the center plane (183) of the diaphragm body, and an inner contour peak line of the diaphragm skirt protrusion (163) is provided close to the center plane (183) of the diaphragm body.

7. The annular diaphragm (1) according to claim 4, wherein the diaphragm corrugated skirt structure has a width of W10 in the radial direction of the diaphragm body (11), the first corrugated segment has a width of W11 in the radial direction of the diaphragm body (11), and the W10 and W11 satisfy: 60%≤W11/W10≤80%.

8. The annular diaphragm (1) according to claim 1, wherein the diaphragm body (11) comprises a diaphragm radial inner edge (12) and a diaphragm radial outer edge (13) which are oppositely provided in the radial direction of the diaphragm body (11), wherein the diaphragm corrugated skirt structure is formed at least at the diaphragm radial inner edge (12).

9. The annular diaphragm (1) according to claim 8, wherein the diaphragm corrugated skirt structure formed at the diaphragm radial inner edge (12) is a diaphragm corrugated inner skirt structure (14); a first corrugated segment of the diaphragm corrugated inner skirt structure (14) is a first inner corrugated segment (141), and a second corrugated segment of the diaphragm corrugated inner skirt structure (14) is a second inner corrugated segment (142); and
the first inner corrugated segment (141), the second inner corrugated segment (142) and the diaphragm body (11) are sequentially provided in the radial direction of the diaphragm body (11) from inside to outside; and a corrugation height of the first inner corrugated segment (141) linearly decreases in the radial direction of the diaphragm body (11) from inside to outside.

10. The annular diaphragm (1) according to claim 8, wherein the diaphragm corrugated skirt structure formed at the diaphragm radial outer edge (13) is a diaphragm corrugated outer skirt structure (15); a first corrugated segment of the diaphragm corrugated outer skirt structure (15) is a first outer corrugated segment (151), and a second corrugated segment of the diaphragm corrugated outer skirt structure (15) is a second outer corrugated segment (152); and
the first outer corrugated segment (151), the second outer corrugated segment (152) and the diaphragm body (11) are sequentially provided in the radial direction of the diaphragm body (11) from outside to inside; and a corrugation height of the first outer corrugated segment (151) linearly decreases in the radial direction of the diaphragm body (11) from outside to inside.

11. A flange, comprising: a flange plate and a shaft extension provided at one axial end of the flange plate, wherein the shaft extension comprises a shaft extension body, the shaft extension body is formed with a shaft extension corrugated skirt structure; the shaft extension corrugated skirt structure is away from the flange plate and is located at one radial end of the shaft extension body; and the shaft extension corrugated skirt structure has a structure matched with the diaphragm corrugated skirt structure of any one of claims 1 to 10.

12. A flange, comprising: a flange plate and a shaft extension provided at one axial end of the flange plate, wherein the shaft extension comprises a shaft extension body, the shaft extension body is formed with a shaft extension corrugated skirt structure; the shaft extension corrugated skirt structure is away from the flange plate and is located at one radial end of the shaft extension body; and the shaft extension corrugated skirt structure is configured for drive connection with a driving object and/or a driven object;
the shaft extension corrugated skirt structure is formed with shaft extension protrusions and shaft extension recesses alternately in a circumferential direction of the shaft extension body, wherein the shaft extension protrusion protrudes towards one axial side of the shaft extension body, and the shaft extension recess recesses towards the other axial side of the shaft extension body; and
the shaft extension protrusion and the shaft extension recess respectively transition gradually and smoothly to the shaft extension body in a radial direction of the shaft extension body.

13. A drive connection component, comprising: an inner flange (3) and the annular diaphragm (1) of any one of claims 1 to 10, the inner flange (3) being the flange of any one of claims 11 to 12;
wherein a radial inner edge of the diaphragm body (11) is formed with the diaphragm corrugated skirt structure, and a radial outer edge of the diaphragm body (11) is formed with diaphragm pin holes (132); and a radial inner edge of a shaft extension body of the inner flange (3) is formed with the shaft extension corrugated skirt structure;
the drive connection component further comprises an outer flange, wherein a flange plate of the outer flange is formed with outer flange pin holes; and
the diaphragm corrugated skirt structure is matched with the shaft extension corrugated skirt structure, and the diaphragm pin holes (132) are matched with the outer flange pin holes, so that the annular diaphragm (1) can be connected with the inner flange (3) and the outer flange.

14. A drive connection component, comprising: the annular diaphragm (1) of any one of claims 1 to 10 and the flange of any one of claims 11 to 12;
wherein both the radial inner edge and the radial outer edge of the diaphragm body (11) are formed with the diaphragm corrugated skirt structure; the diaphragm corrugated skirt structure formed at the radial inner edge of the diaphragm body (11) is a diaphragm corrugated inner skirt structure (14), and the diaphragm corrugated skirt structure formed at the radial outer edge of the diaphragm body (11) is a diaphragm corrugated outer skirt structure (15);
the flange comprises an inner flange (3) and an outer flange, wherein a radial inner edge of a shaft extension body of the inner flange (3) is formed with the shaft extension corrugated skirt structure which is a shaft extension corrugated inner skirt structure (33); and a radial outer edge of a shaft extension body of the outer flange is formed with the shaft extension corrugated skirt structure which is a shaft extension corrugated outer skirt structure; and
the diaphragm corrugated inner skirt structure (14) is matched with the shaft extension corrugated inner skirt structure (33), and the diaphragm corrugated outer skirt structure (15) is matched with the shaft extension corrugated outer skirt structure, so that the annular diaphragm (1) can be connected with the inner flange (3) and the outer flange.
